# EUROPEAN PATENT SPECIFICATION

(11) **EP 0 531 334 B1**
(45) Date of publication and mention of the grant of the patent: **20.03.1996**
(21) Application number: 91909423.5
(22) Date of filing: 22.05.1991
(51) Int. Cl.: H02H 3/33

(54) **ELECTRICAL PROTECTION DEVICES**
ELEKTRISCHE SCHUTZEINRICHTUNGEN
DISPOSITIFS DE PROTECTION ELECTRIQUE

(30) Priority: 25.05.1990 GB 9011799
(43) Date of publication of application: 17.03.1993
(73) Proprietor: CARADON MK ELECTRIC LIMITED, Basildon Essex SS14 3EA (GB)
(72) Inventor: SIKKA, Joginder, London NW9 0BA (GB)
(74) Representative: Adams, William Gordon
(86) International application number: GB9100807
(87) International publication number: WO9119341

(56) References cited:
- EP-A- 0 295 415
- US-A- 3 555 359

## Description

This invention relates to electrical protective devices and concerns residual current operated devices (R.C.D's) which are sometimes known as earth leakage circuit breakers (E.L.C.B's). Such a device is disclosed in US-A-3 555 359. R.C.D's are arranged to monitor the currents flowing in the line and neutral conductors extending between an alternating current source and its load. In a correctly wired circuit the currents flowing in the line and neutral circuits should be equal and their vector sum should be zero. If there is a fault, such as an insulation fault, in the circuit such that current flows to earth the currents in the line and neutral conductors will not balance and their vector sum will not be zero. This imbalance or residual current is detected by the R.C.D.which interrupts the a.c. supply to the load if the magnitude of the residual current exceeds a predetermined level.

In a typical R.C.D the line and neutral conductors pass through a current transformer and an imbalance of the currents in the line and neutral conductors produces in a sense winding on the transformer, an e.m.f. which is used to operate contacts via a relay or a solenoid, to open circuit the line and neutral conductors when the e.m.f. exceeds a predetermined value.

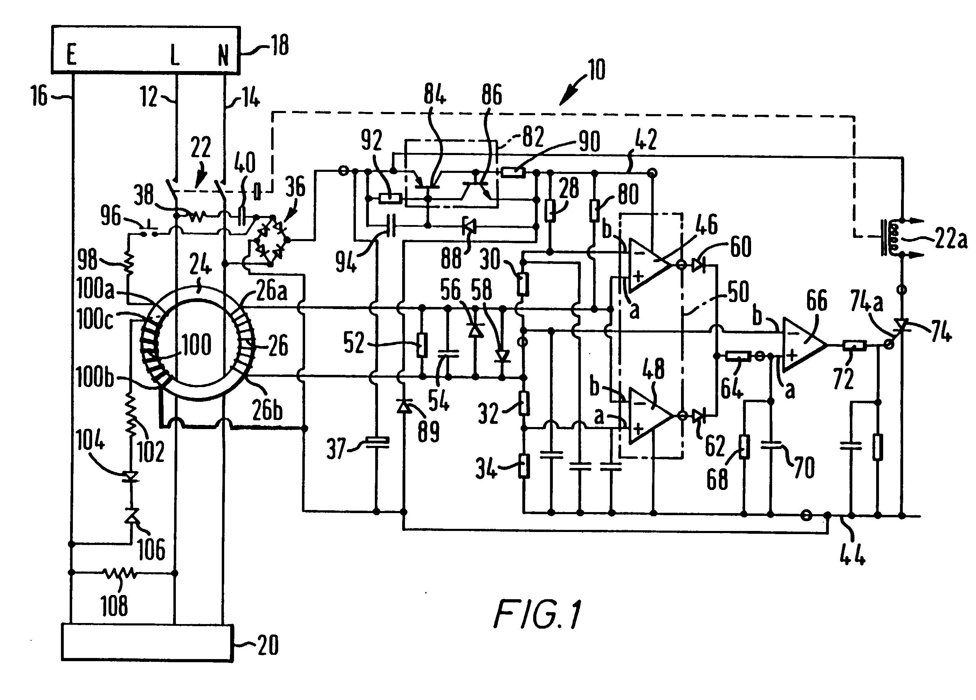

It is desirable that the relay or the solenoid is energised with minimum delay. The R.C.D. should, therefore, be operative on both the positive and negative half cycles of an a.c. waveform. It is also important that the R.C.D, should operate when residual current flows as a result of loads giving rise to pulsating d.c. superimposed onto a low level of smooth d.c. In Fig. 1 of the accompanying drawings there is shown a residual current operated device comprising means for sensing an imbalance between the currents flowing in the line and neutral conductors connected by way of connecting means between an a.c. source and a load, control means coupled to the sensing means and arranged to provide a control signal to open said connecting means if the magnitude of said imbalance exceeds a predetermined value. The embodiment includes a current transformer and the control means comprises a window comparator so that the R.C.D. can be arranged to open the switch means on the positive-or negative-going half cycles of the a.c. waveform of the mains supply. R.C.D's which use a current transformer for the detection of residual currents due to a fault condition will, of course, become inoperative in the event that the sense winding goes open circuit. In such an event the connecting means would not be actuated to disconnect the a.c. supply to the load. The user would not be aware of this potentially hazardous situation but, on the contrary, he would feel safe in his reliance on the protection provided by the R.C.D.

The invention provides a residual current operated device comprising means for sensing an imbalance between the currents flowing in the line and neutral conductors connected by way of connecting means between an a.c. source and a load, and control means having an input coupled to the sensing means and arranged to provide a control signal to open said connecting means if the magnitude of said imbalance exceeds a predetermined value, said sensing means comprising a current transformer having a sense winding for providing an output signal dependent upon the imbalance of the currents flowing in the line and neutral conductors which pass through the current transformer, and means for detecting an open circuit in the sense winding circuit, characterised in that said means for detecting comprises at least two resistors connected in series across a source of d.c. potential difference with the sense winding being coupled in parallel with one of the resistors so that the potential difference developed across said sense winding thereby has a first or a second value according to whether the sense winding is continuous or open circuit respectively, the control means being coupled to said detecting means and arranged to provide said control signal in response to a change from the first to the second value.

The invention will now be described by way of example with reference to Figure 1, which is a circuit diagram of one embodiment of the invention.

The Figure shows a residual current operated device (RCD) 10 for monitoring imbalance currents in line 12 and neutral 14 conductors which are connected between an alternating current source 18 and a load 20, and which pass through a current transformer 24. A double pole switch 22, operable both manually and independently by a solenoid 22a, is connected in the line and neutral conductors as shown. A single pole switch could be used, connected in the line conductor.

The R.C.D. 10 comprises a sense winding 26 on the current transformer having one end 26b coupled to the midpoint of a potential divider comprising resistors 28, 30, 32, 34 connected across a d.c. supply derived from the a.c. supply by way of a conventional bridge rectifier 36, a resistor 38 and capacitor 40. The values of the resistors 28 to 34 are so selected that the datum potential at the junction of winding termination 26b with resistors 30, 32 is approximately half the magnitude of the d.c. voltage between positive and zero voltage lines 42 and 44.

The other end 26a of the sense winding is coupled to the non-inverting 46a and inverting 48b inputs of two comparators 46 and 48 respectively. The inverting input 46b of comparator 46 is coupled to the junction of resistors 28 and 30. Likewise, the non-inverting input 48a of comparator 48 is coupled to the junction of resistors 32 and 34. As connected the comparators 46, 48 function as a window comparator 50 with reference levels defined by the potentials at the junctions of resistors 28, 30 and 32, 34 respectively, with respect to the potential at the junction of resistor 30 with resistor 32. The comparators 46, 48 may comprise two elements of, for example, a quad op-amplifier such as that sold by National Semiconductor under type No. LM324. Connected across the sense winding 26 and in parallel with each other are a load resistor 52, capacitor 54 and oppositely poled diodes 56 and 58. In operation, under balanced conditions, no current flows in the sense winding 26. In the event of a fault, the imbalance or residual current sets up a flux in the toroidal core of the current transformer 24 to generate an e.m.f. across the winding 26 which causes a current to flow through the parallel combination of resistor 52, and capacitor 54. The magnitude of the resulting voltage developed across resistor 52 is dependent upon the magnitude of the residual current.

The a.c. voltage across resistor 52 is applied as an input voltage to the window comparator 50 and if it exceeds the reference voltage across resistor 30 or 32, the comparator 46 or 48 as the case may be provides an output signal by way of diode 60 or 62 and resistor 64 to the non-inverting input 66a of a comparator 66; the inverting input 66b of comparator 66 being coupled to the junction of resistors 30 and 32, to provide a reference voltage.

The comparator 66 may be an element of a quad op-amplifier as aforementioned.

The signal applied to input 66a of the comparator 66 causes the voltage level at the output 66c to increase positively and if the fault leading to the imbalance current persists for a predetermined period defined by resistor 64 and the parallel combination of resistor 68 and capacitor 70, the positive-voltage at the output 66c of the comparator 66 is coupled by way of a resistor 72 to gate 74a of a thyristor 74, to turn on the thyristor 74 to energise the solenoid 22a and thus open the switch 22 to interrupt the a.c. supply to the load 20. Thus, by the use of a window comparator 50 it is possible quickly to disconnect the a.c. supply on the positive or negative-going half cycles or pulsating d.c components of of the a.c. supply.

As aforementioned, if the sense winding of the current transformer goes open circuit, the R.C.D. will become inoperative and it is important to detect this. Means for detecting an open circuit in the sense winding 26 comprises a resistor 80 coupled between the positive rail 42 and the end 26a of the sense winding. In normal operation a very small d.c. current flows from the rail 42 to the zero volt rail 44 by way of resistor 80, the parallel combination of the sense winding 26 and resistor 52, and the resistors 32, 34. As the resistance of sense winding 26 is very much smaller than that of resistor 52 the volt drop across the parallel combination is small and well below the predetermined value to be detected by the window comparator 50. If the sense winding goes open circuit the current supplied by way of resistor 80 flows substantially through resistor 52 and the potential developed across it is greater than the said predetermined magnitude, but still less than the breakdown voltage of diode 58, and is thus detected by comparator 46 with the result that the thyristor is triggered on to energise the solenoid 22a and thus open the switch contacts 22. To overcome the slight imbalance in references voltages across resistors 30 and 32 due to the current fed by way of resistor 80 their values can be adjusted unequally to make the reference voltages very nearly equal.

Thus in the event that the sense winding 26 circuit is open-circuited the contacts 22 are automatically opened to cut-off the a.c. supply to the load.

## Claims

1. A residual current operated device comprising means (24) for sensing an imbalance between the currents flowing in the line (12) and neutral (14) conductors connected by way of connecting means (22) between an a.c. source (18) and a load (20), and control means (46,48,66) having an input coupled to the sensing means and arranged to provide a control signal to open said connecting means if the magnitude of said imbalance exceeds a predetermined value, said sensing means comprising a current transformer (24) having a sense winding (26) for providing an output signal dependent upon the imbalance of the currents flowing in the line and neutral conductors which pass through the current transformer, and means for detecting an open circuit in the sense winding circuit, characterised in that said means for detecting comprises at least two resistors connected in series across a source of d.c. potential difference with the sense winding being coupled in parallel with one (52) of the resistors so that the potential difference developed across said sense winding thereby has a first or a second value according to whether the sense winding is continuous or open circuit respectively, the control means being coupled to said detecting means and arranged to provide said control signal in response to a change from the first to the second value.

2. A device according to claim 1, wherein said developed potential difference is substantially independent of the load current flowing between said source and said load, said first value being lower than said second value.

3. A device according to claim 1 or claim 2 wherein said source of potential difference is coupled to said control means.

4. A device according to any preceding claim wherein the magnitude of the resistance of said one resistor (52) is substantially greater than that of said sense winding.

5. A device according to any preceding claim in which said control means is arranged to provide said control signal if the magnitude of said imbalance signal exceeds said predetermined value in a positive or a negative-going direction.

6. A device according to any preceding claim in which the control means comprises a window comparator (50).

7. A device according to any preceding claim in which the sense means is arranged to provide a sense signal which alternates about a datum level, the control means comprises first and second operational amplifiers (46,48) coupled across said source of potential difference, the inverting input of a first operational amplifier being coupled to a first d.c. level at a predetermined magnitude greater than said datum level, the non-inverting input of a second operational amplifier being coupled to a second d.c. level at a predetermined magnitude less than said datum level, the sense signal being coupled to the non-inverting and inverting inputs respectively of said first and second operational amplifiers.

8. A device according to claim 7, wherein the outputs of said first and second operational amplifiers are coupled by way of delay means (64,68,70) to said connecting means thereby to delay operation to open said connecting means until said imbalance has persisted for a predetermined period.

## Patentansprüche

1. Reststrom-betriebene Einrichtung mit Mitteln (24) zum Abfühlen eines Ungleichgewichtes zwischen Strömen, die in dem Speiseleiter (12) und dem Mittelleiter (14) fließen, die über Verbindungsmittel (22) zwischen einer Wechselspannungsquelle (18) und einer Last (20) geschaltet sind, und mit Steuermitteln (46, 48, 66) mit einem Eingang, der mit den Abfühlmitteln gekoppelt ist und dazu dient, ein Steuersignal zum Öffnen der Verbindungsmittel zu erzeugen, wenn die Größe des Ungleichgewichtes einen vorbestimmten Wert überschreitet, wobei die Abfühlmittel einen Stromtransformator (24) mit einer Abfühlwicklung (26) zur Bildung eines Ausgangssignals enthalten, das von dem Ungleichgewicht der in dem Speiseleiter und dem Mittelleiter fließenden Ströme abhängig ist, die den Stromtransformator durchlaufen, und mit Mitteln zum Detektieren einer Unterbrechung in der Abfühlwicklungs-Schatung,
dadurch gekennzeichnet, daß
die Mittel zum Detektieren wenigstens zwei Widerstände enthalten, die in Reihe über einer Quelle einer Gleichspannungs-Differenz liegen, wobei die Abfühlwicklung parallel mit einem (52) der Widerstände gekoppelt ist, so daß die über der Abfühlwicklung entwickelte Spannungsdifferenz dadurch einen ersten oder einen zweiten Wert annimmt, jenachdem, ob die Abfühlwicklung Durchgang oder Unterbrechung aufweist, und daß die Steuermittel mit den Detekrtiermitteln gekoppelt sind und dazu dienen, das Steuersignal aufgrund eines Übergangs von dem ersten zu dem zweiten Wert zu liefern.

2. Einrichtung nach Anspruch 1, bei der die entwickelte Sapnnungsdifferenz im wesentlichen unabhängig von dem zwischen der Quelle und der Last fließenden Laststrom und der erste Wert geringer als der zweite Wert ist.

3. Einrichtung nach Anspruch 1 oder 2, bei der die Quelle der Spannungsdifferenz mit den Steuermitteln gekoppelt ist.

4. Einrichtung nach einem der vorangehenden Ansprüche, bei der die Widerstandsgröße des einen Widerstands (52) wesentlich größer ist als die der Abfühlwicklung.

5. Einrichtung nach einem der vorangehenden Ansprüche, bei der die Steuermittel dazu dienen, das Steuersignal zu liefern, wenn die Größe des Ungleichgewichtes den vorbestimmten Wert in positiver oder in negativer Richtung überschreitet.

6. Einrichtung nach einem der vorangehenden Anspüche, bei der die Steuermittel einen Fenster-Komparator (50) enthalten.

7. Einrichtung nach einem der vorangehenden Ansprüche, bei der die Abfühlmittel dazu dienen, ein Abfühlsignal zu liefern, das um einen Bezugswert wechselt, und die Steuermittel erste und zweite Operationsverstärker (46, 48) enthalten, die über der Quelle der Spannungsdifferenz gekoppelt sind, und der invertierende Eingang eines ersten Operationsverstärkers mit einer ersten Gleichspannung bei einer vorbestimmten Größe größer als der Bezugswert gekoppelt ist, und der nicht-invertierende Eimgang eines zweiten Operationsverstärkers mit einer zweiten Gleichspannung bei einer vorbestimmten Größe geringer als der Bezugswert gekoppelt ist, und das Abfühlsignal mit den nicht-invertierenden bzw. invertierenden Eingängen des ersten und zweiten Operationsverstärkers gekoppelt ist.

8. Einrichtung nach Anspruch 7, bei der die Ansgänge des ersten und zweiten Operationsverstärkers über Verzögerungsmittel (64, 68) mit den Verbindungsmitteln gekoppelt sind, um dadurch den Vorgang zum Öffnen der Verbindungsmitttel zu verzögern, bis das Ungleichgewicht für eine vorbestimmte Zeit bestanden hat.

## Revendications

1. Dispositif fonctionnant par courant résiduel comprenant des moyens (24) pour détecter un déséquilibre entre les courants circulant dans des conducteurs de ligne (12) et neutre (14) connectés par l'intermédiaire de moyens de connection (22) entre une source de courant alternatif (18) et une charge (20), et des moyens de commande (46, 48, 66) comportant une entrée couplée aux moyens de détection et disposés de manière à fournir un signal de commande pour ouvrir lesdits moyens de connection lorsque l'amplitude dudit déséquilibre dépasse une valeur prédéterminée, lesdits moyens de détection comprenant un transformateur de courant (24) comportant un enroulement de détection (26) pour délivrer un signal de sortie qui dépend du déséquilibre des courants circulant dans les conducteurs de ligne et neutre qui traversent le transformateur de courant, et des moyens pour détecter un circuit ouvert dans le circuit d'enroulement de détection, caractérisé en ce que lesdits moyens de détection comprennent au moins deux résistances connectées en série sur une source de différence de potentiel en courant continu, l'enroulement de détection étant couplé en parallèle avec l'une (52) des résistances de manière que la différence de potentiel développée ainsi sur ledit enroulement de détection possède une première ou une seconde valeur selon que l'enroulement de détection est respectivement en circuit continu ou ouvert, les moyens de commande étant couplés auxdits moyens de détection et conçus et disposés de manière à délivrer ledit signal de commande en réponse à un changement de la première vers la seconde valeur.

2. Dispositif selon la revendication 1 dans lequel ladite différence de potentiel développée est sensiblement indépendante du courant de charge s'écoulant entre ladite source et ladite charge, ladite première valeur étant inférieure à ladite seconde valeur.

3. Dispositif selon la revendication 1 ou la revendication 2 dans lequel ladite source de différence de potentiel est couplée auxdits moyens de commande.

4. Dispositif selon l'une quelconque des revendications précédentes dans lequel la valeur de la résistance de ladite résistance (52) est sensiblement plus grande que celle dudit enroulement de détection.

5. Dispositif selon l'une quelconque des revendications précédentes dans lequel lesdits moyens de commande sont conçus de manière à fournir ledit signal de commande lorsque l'amplitude dudit signal de déséquilibre excède ladite valeur prédéterminée dans un sens devenant positif ou dans un sens devenant négatif.

6. Dispositif selon l'une quelconque des revendications précédentes dans lequel les moyens de commande comprennent un comparateur à fenêtre (50).

7. Dispositif selon l'une quelconque des revendications précédentes dans lequel les moyens de détection sont conçus de façon à fournir un signal de détection qui varie de façon alternative autour d'un niveau donné, les moyens de commande comprennent des premier et second amplificateurs opérationnels (46, 48) couplés sur ladite source de différence de potentiel, l'entrée d'inversion d'un premier amplificateur opérationnel étant couplée à un premier niveau de courant continu à une amplitude prédéterminée supérieure audit niveau donné.,l'entrée de non inversion d'un second amplificateur opérationnel étant couplée à un second niveau de courant continu à une amplitude prédéterminée inférieure audit niveau donné, le signal de détection étant couplé respectivement aux entrées de non inversion et d'inversion desdits premier et second amplificateurs opérationnels.

8. Dispositif selon la revendication 7 dans lequel les sorties desdits premier et second amplificateurs différentiels sont couplés par l'intermédiaire de moyens de retard (64, 68, 70) auxdits moyens de connection de manière à retarder le fonctionnement d'ouverture desdits moyens de connection jusqu'à ce que le déséquilibre ait persisté pendant une période prédéterminée.
